# EUROPÄISCHE PATENTSCHRIFT

(11) **EP 2 681 418 B1**
(45) Veröffentlichungstag und Bekanntmachung des Hinweises auf die Patenterteilung: **27.12.2017**
(21) Anmeldenummer: 12710187.1
(22) Anmeldetag: 02.03.2012
(51) Int. Cl.: F02C 7/06, F16N 7/40, F01D 21/00, F01D 25/20

(54) **ÖLVERSORGUNGSSYSTEM FÜR EIN FLUGTRIEBWERK**
OIL SUPPLY SYSTEM FOR AN AIRCRAFT ENGINE
SYSTÈME D'ALIMENTATION EN HUILE POUR UN RÉACTEUR D'AÉRONEF

(30) Priorität: 03.03.2011 DE 102011012863
(43) Veröffentlichungstag der Anmeldung: 08.01.2014
(73) Patentinhaber: Rolls-Royce Deutschland Ltd & Co KG, 15827 Blankenfelde-Mahlow (DE)
(72) Erfinder: HOMEYER, Christian, 12209 Berlin (DE)
(74) Vertreter: Maikowski & Ninnemann Patentanwälte Partnerschaft mbB
(86) Internationale Anmeldenummer: PCT/EP2012/053634
(87) Internationale Veröffentlichungsnummer: WO 2012/117094

(56) Entgegenhaltungen:
- US-A- 2 453 217
- US-A- 2 991 845
- US-A- 5 685 396
- US-A1- 2008 196 383
- US-A1- 2008 264 726

## Beschreibung

Die Erfindung betrifft ein Flugtriebwerk mit einem Ölversorgungssystem, das mindestens einen geschlossenen Ölkreislauf, in den ein Öltank mit einem dessen Austrittsöffnung in eine Saugleitung zugeordneten Schließventil, welches nach dem Abschalten des Triebwerks verschließbar ist, eine Ölpumpe und mindestens ein über eine Druckleitung mit Öl zu versorgender Verbraucher eingebunden sind, umfasst.

Gasturbinentriebwerke sind mit einem Ölsystem zur Schmierung, Kühlung und zum Korrosionsschutz von Getrieben, Lagern und Wellenkupplungen ausgerüstet. Das Öl kann auch als Dichtmittel zwischen rotierenden Wellen verwendet werden. Turboproptriebwerke verfügen über ein zusätzliches Ölsystem zur Versorgung des hochbelasteten Propellergetriebes und des Propellerblattverstellsystems. Die Ölverteilung erfolgt über einen Ölkreislauf, der von einem Öltank über eine Saugleitung und eine Ölpumpe sowie eine Druckleitung und die Verbraucher wieder zurück zum Öltank führt. Bei einigen Triebwerken ist an der Austrittsseite des Öls aus einem Öltank in die Saugleitung ein Schließventil angeordnet. Das Schließventil wird während des Triebwerksbetriebs - beispielsweise durch den vom Verdichter erzeugten Luftdruck - offen gehalten. Es wird geschlossen, wenn nach dem Abschalten des Triebwerks der Luftdruck aufgrund sinkender Verdichterleistung geringer wird, um dadurch ein Entleeren des Öltanks in tiefer liegende Bauteile, beispielsweise das Getriebe, zu verhindern. Die im Allgemeinen über eine Zapfwelle vom Verdichter angetriebenen Ölpumpen bleiben jedoch während des Auslaufens der Verdichterwelle, und zwar wenn der Öltank mithilfe des Schließventils bereits verschlossen ist, in Betrieb, und saugen mithin aus einer geschlossenen Saugleitung. Der dadurch in der Saugleitung zwischen dem Schließventil und der Ölpumpe erzeugte Unterdruck kann so groß werden, dass die Saugleitung plastisch verformt wird und durch eine dadurch bewirkte Querschnittsverringerung die Saugleistung der Ölpumpe während des Triebwerksbetriebs beeinträchtigt wird.

Die US 5 685 396 A beschreibt eine Vorrichtung zum Auswechseln von Motoröl in Verbrennungsmaschinen. Die Vorrichtung umfasst ein Containermodul und ein Servicemodul. Das Containermodul umfasst u. a. einen Tank für altes Öl und einen Tank für neues Öl. Der Tank für neues Öl ist über ein Ventil mit einer Saugleitung verbunden. Die Saugleitung ist des Weiteren über ein Ventil und eine Leitung mit der Umgebungsluft verbunden. Während einer Evakuierungssequenz wird Öl in den Tank für altes Öl abgeleitet, wobei ein Strömungspfad geöffnet wird, der über eine Evakuierungsleitung, eine Pumpe und eine Ablaufleitung in den Tank für altes Öl mündet.

Aus der US 2 453 217 A ist ein Ölversorgungssystem für ein Flugtriebwerk bekannt, bei dem Öl von einem Öltank über eine Leitung zu einem Flugtriebwerk geleitet wird. Unter dem Flugtriebwerk wird das Öl in einer Ölwanne gesammelt und von dieser über eine Pumpe und eine Leitung zum Öltank zurückgeführt. Dabei ist ein Mechanismus vorgesehen, der verhindert, dass die Pumpe Öl aus der Ölwanne absaugt, wenn der Ölstand in der Ölwanne gering ist. Hierzu ist vorgesehen, dass mit abnehmendem Ölstand in der Ölwanne, der zu einem teilweisen Verschließen eines Ausgangsventils der Ölwanne führt, sich zunehmend eine Rückführleitung öffnet, die sich zwischen einem vor der Pumpe gelegenem Absperrventil und einem Punkt hinter der Pumpe öffnet. Sofern überhaupt kein Öl mehr aus der Ölwanne bereitgestellt wird, läuft die Pumpe nur noch über das rückgeführte Öl der Rückführleitung.

Der Erfindung liegt die Aufgabe zugrunde, ein Ölversorgungssystem für ein Gasturbinentriebwerk, bei dem die Austrittsöffnung des in den Ölkreislauf eingebundenen Öltanks nach dem Abschalten des Triebwerks durch ein Schließventil verschließbar ist, so auszubilden, dass eine durch Unterdruck bedingte Verformung der Saugleitung verhindert wird.

Erfindungsgemäß wird die Aufgabe mit einem gemäß den Merkmalen des Patentanspruchs 1 ausgebildeten Flugtriebwerk mit einem Ölversorgungssystem gelöst.

Vorteilhafte Weiterbildungen der Erfindung sind Gegenstand der Unteransprüche.

Bei einem Flugtriebwerk mit einem Ölversorgungssystem mit mindestens einem geschlossenen Ölkreislauf, in den ein Öltank mit einem dessen Austrittsöffnung in eine Saugleitung zugeordneten Schließventil, welches nach dem Abschalten des Triebwerks verschließbar ist, eine Ölpumpe und mindestens ein über eine Druckleitung mit Öl zu versorgender Verbraucher eingebunden sind, besteht der Grundgedanke der Erfindung in der Anordnung einer an die Saugleitung angeschlossenen Unterdruckentlastungsleitung, die nach dem Abschalten des Triebwerks und bei an der Saugseite des Öltanks geschlossenem Schließventil und weiterlaufender Ölpumpe für eine Druckentlastung in der Saugleitung sorgt. Eine Verformung der Saugleitung und eine daraus resultierende Beeinträchtigung der Pumpensaugleistung werden verhindert. In die mit der Druckleitung des Ölkreislaufs oder der Umgebungsluft verbundene Unterdruckentlastungsleitung ist ein Absperrventil eingebunden, das sich bei einem bestimmten Unterdruck in der Saugleitung öffnet. In die an die Druckleitung angeschlossene Unterdruckentlastungsleitung kann anstelle des Absperrventils auch ein Volumenstrombegrenzer, beispielsweise in Form einer Blende, eingebunden sein, der im Betrieb des Triebwerks einen begrenzten, unschädlichen Ölrückstrom in die Saugleitung zulässt.

Die Anwendung der Erfindung erfolgt beispielsweise bei einem Turboproptriebwerk mit einem Turbomaschinenölkreislauf und einem Propellerölkreislauf, deren Saugleitung an einen gemeinsamen Öltank angeschlossen ist, wobei die mit der Saugleitung verbundene Unterdruckentlastungsleitung über das Absperrventil oder den Volumenstrombegrenzer an die Druckleitung des Turbomaschinenölkreislaufs oder des Propellerölkreislaufs angeschlossen ist oder ausschließlich über das Absperrventil mit der Umgebungsluft verbindbar ist.

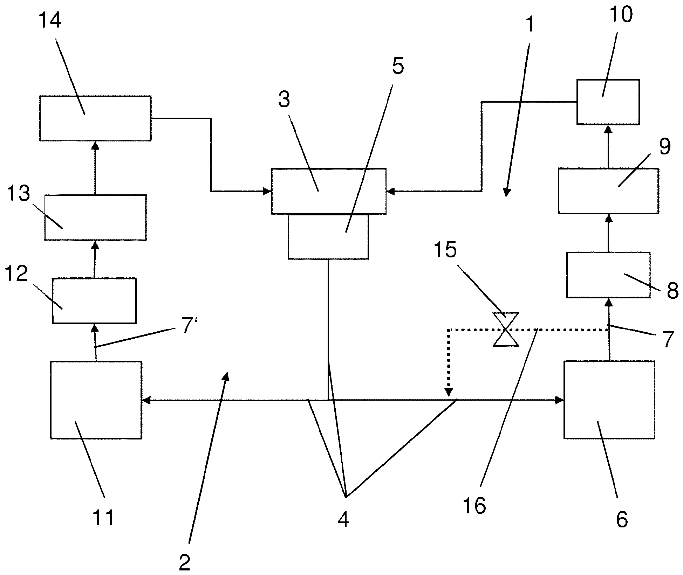

Ein Ausführungsbeispiel der Erfindung wird anhand der Zeichnung, in deren einziger Figur ein Blockschaubild eines zwei getrennte Ölkreisläufe umfassenden Ölversorgungssystems für ein Turboproptriebwerk dargestellt ist, näher erläutert.

Wie die Zeichnung zeigt, ist in einen Turbomaschinenölkreislauf 1 und in einen Propellerölkreislauf 2 ein gemeinsamer Öltank 3 mit dessen Austrittsöffnung zu den Saugleitungen 4 zugeordnetem Schließventil 5 eingebunden. Der Turbomaschinenkreislauf 1 führt über eine erste Ölpumpe 6 (Turbomaschinenölpumpe) sowie in dessen Druckleitung 7 eingebundene erste Ölfilter 8, erste Ölkühler 9 und die Lager und Getriebe der Turbomaschine 10 zurück in den gemeinsamen Öltank 3. Im Propellerölkreislauf 2 gelangt das mittels der zweiten Ölpumpe 11 (Propellerölpumpe) abgesaugte Öl in der Druckleitung 7' über den zweiten Ölfilter 12, den zweiten Ölkühler 13 und das Propellergetriebe 14 zurück in den gemeinsamen Öltank 3. In die Saugleitung 4 vor der ersten Ölpumpe 6 mündet eine durch ein Ventil 15 verschließbare Unterdruckentlastungsleitung 16, die an die Druckleitung 7 hinter der ersten Ölpumpe 6 angeschlossen ist. Anstelle des Ventils 15 kann hier in die Unterdruckentlastungsleitung 16 auch eine Blende (nicht dargestellt) eingebunden sein, die gegenüber dem Ventil 15 insofern vorteilhaft ist, als keine Bauteile vorhanden sind, die versagen könnten.

Sobald nach dem Abschalten des Triebwerks das Schließventil 5 schließt, aber die vom Verdichter des Triebwerks angetriebenen Ölpumpen noch weiterlaufen, wird bei geöffnetem Ventil 15 durch die an die Saugleitung 4 angeschlossene - hier mit der Druckleitung 7 verbundene - Unterdruckentlastungsleitung 16 angesaugt und so die Erzeugung eines Unterdrucks in der Saugleitung 4 und deren plastische Verformung und letztlich eine Beeinträchtigung der Pumpensaugleistung aufgrund eines verringerten Saugleitungsquerschnitts verhindert. Während des Betriebs der Turbomaschine 10 ist das Ventil 15 geschlossen, so dass keine Verbindung zur Druckleitung 7 besteht und kein Öl von der Druckleitung 7 in die Saugleitung 4 gelangen kann. Über eine anstelle des Ventils 15 in die Unterdruckentlastungsleitung 16 eingebundene - ständig offene - Blende (nicht dargestellt) gelangt während des Betriebs der Turbomaschine 10 eine begrenze Ölmenge aus der Druckleitung 7 zurück in die Saugleitung 4. Die Blende ist jedoch so bemessen, dass die Funktion des Ölversorgungssystems gewährleistet ist und nach dem Abschalten der Turbomaschine ein ausreichender Druckausgleich über die zur Druckleitung 7 offene Unterdruckentlastungsleitung 16 gewährleistet ist.

Die an die Saugleitung 4 angeschlossene, mit einem Ventil oder einer Blende versehene Unterdruckentlastungsleitung 16 kann auch mit einer anderen Öldruckleitung, hier der sich an die zweite Ölpumpe 11 anschließenden Druckleitung 7', verbunden sein, um nach dem Schließen des Schließventils 5 eine Verformung der Saugleitung 4 zu verhindern. Gleichermaßen ist es denkbar, die an die Saugleitung 4 angeschlossene Unterdruckentlastungsleitung 16 nach dem Abschalten des Triebwerks und dem Schließen des Schließventils 5 mit der Umgebungsluft zu verbinden, wenn durch ein geeignetes Ventil gewährleistet ist, dass kein Öl den Ölkreislauf verlassen kann.

### Bezugszeichenliste

- 1: Turbomaschinenölkreislauf
- 2: Propellerölkreislauf
- 3: Öltank
- 4: Saugleitung
- 5: Schließventil von 3
- 6: erste Ölpumpe von 1
- 7: Druckleitung von 1
- 7': Druckleitung von 2
- 8: erster Ölfilter
- 9: erster Ölkühler
- 10: Turbomaschine
- 11: zweite Ölpumpe von 2
- 12: zweiter Ölfilter
- 13: zweiter Ölkühler
- 14: Propellergetriebe
- 15: Absperrventil
- 16: Unterdruckentlastungsleitung

## Patentansprüche

1. Flugtriebwerk mit einem Ölversorgungssystem, das mindestens einen geschlossenen Ölkreislauf, in den ein Öltank (3) mit einem dessen Austrittsöffnung in eine Saugleitung (4) zugeordneten Schließventil (5), welches nach dem Abschalten des Triebwerks verschließbar ist, eine Ölpumpe (6, 11) und mindestens ein über eine Druckleitung (7, 7') mit Öl zu versorgender Verbraucher eingebunden sind, umfasst, **dadurch gekennzeichnet, dass** an die Saugleitung (4) eine Unterdruckentlastungsleitung (16) mit einem in diese eingebundenen Absperrventil (15) angeschlossen ist, die zur Druckentlastung der Saugleitung nach dem Abschalten des Triebwerks und bei geschlossenem Schließventil (5) und weiterlaufender Ölpumpe mit der Druckleitung (7, 7') oder mit der Umgebungsluft verbindbar ist; oder die über einen in diese eingebundenen Volumenstrombegrenzer, anstelle des Absperrventils (15), ständig mit der Druckleitung (7, 7') verbunden ist.

2. Flugtriebwerk nach Anspruch 1, **dadurch gekennzeichnet, dass** der Volumenstrombegrenzer eine Blende ist, die so dimensioniert ist, dass während des Triebwerksbetriebs nur ein begrenzter, zulässiger Ölvolumenstrom in die Saugleitung (4, 4') zurückfließt.

3. Flugtriebwerk nach Anspruch 1, **dadurch gekennzeichnet, dass** das Absperrventil (15) so ausgebildet ist, das es nach dem Abschalten des Triebwerks bei Erreichen eines bestimmten Unterdrucks in der Saugleitung (4) öffnet.

4. Flugtriebwerk nach Anspruch 1, **dadurch gekennzeichnet, dass** das Flugtriebwerk ein Turboproptriebwerk mit einem Turbomaschinenölkreislauf (1) und einem Propellerölkreislauf (2) ist, deren Saugleitung (4) an einen gemeinsamen, saugseitig mit einem Schließventil (5) versehenen Öltank (3) angeschlossen ist, wobei die mit der Saugleitung (4) verbundene Unterdruckentlastungsleitung (16) über das Absperrventil (15) oder den Volumenstrombegrenzer an die Druckleitung (7, 7') des Turbomaschinenölkreislaufs (1) oder des Propellerölkreislaufs (2) oder ausschließlich über das Absperrventil mit der Umgebungsluft verbindbar ist.

## Claims

1. Aircraft engine with an oil supply system, including at least one closed oil circuit, into which are integrated: an oil tank (3) having a closing valve (5) that is associated with the outlet opening of the oil tank (3) in a suction line (4) and that can be closed after engine shut-down, an oil pump (6, 11) and at least one consumer to be supplied with oil by means of a pressure line (7, 7'), **characterized in that** a negative pressure relief line (16) having a shut-off valve (15) incorporated is connected to the suction line (4), said negative pressure relief line (16), for ensuring pressure relief in the suction line, being connectable to the pressure line (7, 7') or to the ambient air after shutdown of the engine, with the closing valve (5) closed and with the oil pump continuing running, or being permanently connected to the pressure line (7, 7') via a volume flow limiter incorporated into said negative pressure relief line (16), instead of the shut-off valve (15).

2. Aircraft engine in accordance with Claim 1, **characterized in that** the volume flow limiter is a diaphragm dimensioned such that during operation of the engine only a limited, permissible oil volume flow passes back into the suction line (4, 4').

3. Aircraft engine in accordance with Claim 1, **characterized in that** the shut-off valve (15) is designed such that it opens after shut-down of the engine when a certain negative pressure is reached in the suction line (4).

4. Aircraft engine in accordance with Claim 1, **characterized in that** the aircraft engine is a turboprop engine with a turbomachine oil circuit (1) and a propeller oil circuit (2), the suction line (4) of which is connected to a common oil tank (3) provided with a closing valve (5) on the suction side, where the negative pressure relief line (16) connected to the suction line (4) is connectable via the shut-off valve (15) or the volume flow limiter to the pressure line (7, 7') of the turbomachine oil circuit (1) or of the propeller oil circuit (2) or to the ambient air exclusively via the shut-off valve.

## Revendications

1. Moteur d'avion avec un système d'alimentation en huile qui comprend au moins un circuit d'huile fermé dans lequel sont intégrés: un réservoir d'huile (3) avec une soupape de fermeture (5) qui est associée à l'orifice de sortie dudit réservoir d'huile dans une conduite d'aspiration (4) et qui peut être refermée après l'arrêt du moteur, une pompe à huile (6, 11) et au moins un consommateur à alimenter en huile par le biais d'une conduite de refoulement (7, 7'), **caractérisé en ce qu'**une conduite de décharge de dépression (16) avec une vanne d'arrêt (15) intégrée dans celle-ci est raccordée à la conduite d'aspiration (4), ladite conduite de décharge de dépression (16) pouvant être connectée à la conduite de refoulement (7, 7') ou à l'air ambiant pour dépressuriser la conduite d'aspiration après l'arrêt du moteur et lorsque la soupape de fermeture (5) est fermée et la pompe à huile continue à fonctionner, ou qui est connectée en permanence à la conduite de refoulement (7, 7') par le biais d'un limiteur de débit volumétrique intégré à celle-ci, à la place de la vanne d'arrêt (15).

2. Moteur d'avion selon la revendication n° 1, **caractérisé en ce que** le limiteur de débit volumétrique est un diaphragme qui est dimensionné de telle sorte que durant le fonctionnement du moteur, seul un débit volumétrique limité admissible retourne dans la conduite d'aspiration (4, 4').

3. Moteur d'avion selon la revendication n° 1, **caractérisé en ce que** la vanne d'arrêt (15) est conçue de sorte à s'ouvrir après l'arrêt du moteur une fois une certaine dépression atteinte dans la conduite d'aspiration (4).

4. Moteur d'avion selon la revendication n° 1, **caractérisé en ce que** le moteur d'avion est un turbopropulseur avec un circuit d'huile de turbomachine (1) et un circuit d'huile de propulseur (2) dont la conduite d'aspiration (4) est raccordée à un réservoir d'huile (3) commun doté, côté aspiration, d'une soupape de fermeture (5), sachant que la conduite de décharge de dépression (16) connectée à la conduite d'aspiration (4) peut être reliée, par le biais de la vanne d'arrêt (15) ou du limiteur de débit volumétrique, à la conduite de refoulement (7, 7') du circuit d'huile de turbomachine (1) ou du circuit d'huile de propulseur (2), ou à l'air ambiant exclusivement par le biais de la vanne d'arrêt.
